# EUROPÄISCHE PATENTSCHRIFT

(11) **EP 3 069 397 B1**
(45) Veröffentlichungstag und Bekanntmachung des Hinweises auf die Patenterteilung: **04.04.2018**
(21) Anmeldenummer: 14808526.9
(22) Anmeldetag: 14.11.2014
(51) Int. Cl.: H01M 4/131, H01G 11/08, H01G 11/78, H01M 4/133, H01M 4/48, H01M 4/587, H01M 10/04, H01M 10/0525, H01M 10/058, H01M 16/00

(54) **ENERGIEVERSORGUNGSVORRICHTUNG**
POWER SUPPLY DEVICE
DISPOSITIF D'ALIMENTATION EN ÉNERGIE

(30) Priorität: 14.11.2013 DE 102013112578
(43) Veröffentlichungstag der Anmeldung: 21.09.2016
(73) Patentinhaber: Technische Universität Darmstadt, 64289 Darmstadt (DE)
(72) Erfinder: STAAB, Matthias, 63762 Großostheim (DE); GREINER, Felix, 34613 Schwalmstadt (DE); SCHLAAK, Helmut F., 64372 Ober-Ramstadt (DE); RAUBER, Markus, 81539 München (DE); ENSINGER, Wolfgang, 64839 Münster-Altheim (DE); TEMPEL, Hermann, 52351 Düren (DE); SCHNEIDER, Jörg J., 64342 Seeheim-Jugenheim (DE)
(74) Vertreter: Katscher Habermann Patentanwälte
(86) Internationale Anmeldenummer: PCT/EP2014/074592
(87) Internationale Veröffentlichungsnummer: WO 2015/071407

(56) Entgegenhaltungen:
- JP-A- 2004 355 823
- US-A1- 2005 153 173
- US-A1- 2008 299 460
- US-A1- 2010 028 766

## Beschreibung

Die Erfindung betrifft eine Energieversorgungsvorrichtung mit einem Superkondensator und mit einer wieder aufladbaren Batterie, wobei auf eine Oberfläche des Superkondensators eine Elektrodenbeschichtung aufgebracht ist, die eine erste Batterieelektrode bildet, und wobei der Superkondensator mehrere stabförmig ausgebildete Kondensatorabschnitte aufweist.

Ein Superkondensator weist im Verhältnis zu dem Gewicht eine besonders hohe Leistungsdichte auf, die etwa 10- bis 100-fach größer als bei herkömmlichen Kondensatoren ist. Ein Superkondensator kann beispielsweise als elektrochemischer Kondensator ausgebildet sein, bei dem vorzugsweise ein geeigneter Elektrolyt eine Ionenleitfähigkeit zwischen zwei Elektroden bewirkt Superkondensatoren können bezogen auf den Raumbedarf sehr hohe Kapazitätswerte von bis zu 12 000 F bei 1,2 V aufweisen.

Aus US 2008/0299460 A1 ist eine Anode einer Lithiumbatterie bekannt, die eine Beschichtung aus Kohlenstoffnanoröhrchen aufweist, wodurch in Kombination mit verschiedenen Elektrolyten eine hohe Kapazität der Batterie ermöglicht wird.

Derartige Energieversorgungsvorrichtungen können in miniaturisierter Bauweise hergestellt und zur Energieversorgung von Mikrosystemen eingesetzt werden. Der Superkondensator kann in diesem Fall beispielsweise als Mikrosuperkondensator und die Batterie als Mikrobatterie ausgebildet sein, die jeweils Abmessungen im Bereich von Millimetern oder weniger aufweisen. Ein derartiges Mikrosystem kann beispielsweise ein Sensorknoten sein, der einen Sensor-Messwert drahtlos an einen Empfänger übermittelt.

Es ist ebenfalls möglich, den Superkondensator mit besonders hoher Kapazität und die wieder aufladbare Batterie jeweils ausreichend groß zu dimensionieren und auszugestalten, um beispielsweise ein Fahrzeug mit einer Reichweite von mehreren Kilometern bis zu 100 Kilometer und mehr zu betreiben.

Aus der Praxis ist es weiterhin bekannt, dass der Superkondensator und die Batterie parallel geschaltet und betrieben werden, um beispielsweise in der Energieversorgungsvorrichtung auftretende Stoßstrombelastungen durch den Superkondensator zu puffern und die wieder aufladbare Batterie in günstigen Betriebsbereichen zu betreiben.

Der Superkondensator und die wieder aufladbare Batterie werden üblicherweise getrennt voneinander hergestellt und anschließend auf einer geeigneten Trägerplatte oder dergleichen angeordnet und miteinander verschaltet, um die Energieversorgungsvorrichtung herzustellen. Die hierfür erforderlichen Herstellungsschritte sind äußerst aufwendig und kostenintensiv. Zudem ist der für die Anordnung und Verschaltung des Superkondensators und der wieder aufladbaren Batterie erforderlichen Bauraum vergleichsweise groß.

Es sind beispielsweise aus US 2005/153173 A1, aus JP 2004 355823 A oder aus US 2010/028766 A1 Kombinationen eines Superkondensators mit einer Batterie bekannt, die beide in einem gemeinsamen Gehäuse untergebracht sind und deshalb sehr raumsparend angeordnet werden können.

Als Aufgabe der Erfindung wird es daher angesehen, eine Energieversorgungsvorrichtung bereitzustellen, die einfacher und kostengünstiger hergestellt werden kann und einen geringeren Bauraum erforderlich macht.

Diese Aufgabe wird erfindungsgemäß dadurch gelöst, dass die Kondensatorabschnitte jeweils einen elektrisch leitenden Nanodraht oder eine Nanofaser aufweisen, wobei die Nanodrähte oder die Nanofasern der Kondensatorabschnitte elektrisch leitend miteinander verbunden sind und eine erste Superkondensatorelektrode bilden, wobei die erste Superkondensatorelektrode von einem Dielektrikum umgeben ist und wobei auf das Dielektrikum eine elektrisch leitfähige Beschichtung aufgebracht ist, die eine zweite Superkondensatorelektrode bildet, und dass die wieder aufladbare Batterie Kohlenstoffnanoröhren aufweist, die die zweite Batterieelektrode bilden.

Auf diese Weise können der Superkondensator und die wieder aufladbare Batterie als integriertes Bauteil gefertigt werden, so dass der Aufwand für die Montage und Kontaktierung des Superkondensators und der wieder aufladbaren Batterie verringert werden kann. Zudem wird durch eine integrierte Bauweise des Superkondensators und der wieder aufladbaren Batterie ein für die Energieversorgungsvorrichtung erforderlicher Bauraum deutlich reduziert.

Um die Herstellungskosten der Energieversorgungsvorrichtung weiter zu senken, ist erfindungsgemäß vorgesehen, dass der Superkondensator und die wieder aufladbare Batterie in einem gemeinsamen Gehäuse angeordnet sind. Auf diese Weise können der Superkondensator und die wieder aufladbare Batterie in einem gemeinsamen Arbeitsschritt einfach und kostengünstig auf einer gegebenenfalls gemeinsamen Trägerplatte in dem Gehäuse angeordnet werden.

Vorteilhafterweise ist erfindungsgemäß vorgesehen, dass ein Elektrolyt und eine zweite Batterieelektrode der wieder aufladbaren Batterie innerhalb des Gehäuses angeordnet sind. Das Gehäuse umfasst und umgibt sämtliche Komponenten des Superkondensators und der Batterie, wobei lediglich die für eine Ansteuerung und Energieversorgung notwendigen Kontaktierungsstellen aus dem Gehäuse herausgeführt sind.

Der Superkondensator und die Batterie können in vorteilhafter Weise sehr klein ausgestaltet sein und charakteristische Abmessungen im Bereich von Millimetern, Mikrometern oder sogar Nanometern aufweisen. Durch eine geeignete Formgebung der jeweiligen Elektroden kann eine besonders hohe Oberfläche bezogen auf den Raumgehalt oder das Gewicht des Superkondensators ermöglicht werden. Eine hohe Oberfläche ermöglicht eine hohe Leistungsdichte und große Kapazitätswerte bei geringem Gewicht und Raumbedarf. Bei der erfindungsgemäßen Energieversorgungsvorrichtung ist vorgesehen, dass die wieder aufladbare Batterie mindestens ein Elektrodengebilde aus Kohlenstoffnanoröhren aufweist, welche die zweite Batterieelektrode bilden. In dem vorzugsweise in großer Anzahl vorgesehenen Elektrodengebilde aus Kohlenstoff können sich Ionen einlagern, um die Ladungsträger zu binden und eine Batteriespannung zu erzeugen. Die Elektrodengebilde können beispielsweise als Kohlenstoffnanoröhren ausgebildet sein, die vorteilhafterweise auf einem geeigneten elektrisch leitfähigen Kohlenstoffsubstrat oder auf einem anderen geeigneten Substratmaterial hergestellt sind, wobei die Kohlenstoffnanoröhren mit einer Unterseite auf dem elektrisch leitfähigen Substrat verankert sind und sich im Wesentlichen senkrecht zu einer Substratoberfläche erstrecken. Auf diese Weise können eine Vielzahl von Kohlenstoffnanoröhren auf einer vergleichsweise geringen Substratfläche angeordnet werden, wobei die Kohlenstoffnanoröhren wiederum eine vergleichsweise große Oberfläche aufweisen, so dass durch eine solche Anordnung eine besonders hohe Kapazität der wieder aufladbaren Mikrobatterie erreicht werden kann. Die Elektrodengebilde können auch einzelne Kohlenstofffasern oder Kohlenstoffnanodrähte sein. Es ist ebenfalls möglich, die Elektrodengebilde nicht aus Kohlenstoff, sondern aus einem anderen elektrisch leitfähigen Material herzustellen.

Bei Röhren oder Fasern mit einer fadenförmigen oder bandförmigen Formgebung weisen die Elektrodengebilde ein besonders hohes und damit vorteilhaftes Verhältnis von Oberfläche zu Raumbedarf auf. Die Elektrodengebilde müssen jedoch nicht notwendiger Weise eine fadenförmige oder bandförmige Formgebung aufweisen und können in nahezu jeder beliebigen Form ausgebildet sein, um beispielsweise den Aufwand und die Herstellungskosten für die Elektrodengebilde möglichst gering zu halten.

Der für die Energieversorgungsvorrichtung erforderliche Bauraum kann dadurch weiter verringert werden, dass der Superkondensator mehrere benachbart angeordnete, gleichförmig ausgerichtete und im Wesentlichen stabförmig ausgebildete Kondensatorabschnitte oder Elektrodengebilde aufweist. Auf diese Weise kann zudem eine Oberfläche der ersten Batterieelektrode an eine Oberfläche der vorzugsweise durch Kohlenstoffnanoröhren ausgebildeten zweiten Batterieelektrode einfach angepasst werden. Vorteilhafterweise sind die stabförmigen Kondensatorabschnitte ebenfalls auf einem elektrisch leitfähigen Substrat ausgebildet.

Erfindungsgemäß ist vorgesehen, dass die Kondensatorabschnitte oder Elektrodengebilde jeweils einen elektrisch leitfähigen Nanodraht aufweisen, wobei die einzelnen Nanodrähte der Kondensatorabschnitte oder der Elektrodengebilde elektrisch leitend miteinander verbunden sind und eine erste Superkondensatorelektrode bilden, wobei die erste Superkondensatorelektrode von einem Dielektrikum umgeben ist, und wobei auf das Dielektrikum eine elektrisch leitfähige Beschichtung aufgebracht ist, die eine zweite Superkondensatorelektrode bildet. Vorteilhafterweise werden der Superkondensator und die wieder aufladbare Batterie jeweils auf einem Substratabschnitt angeordnet.

Erfindungsgemäß ist die Oberfläche des Superkondensators die zweite Superkondensatorelektrode. Auf diese Weise wird die erste Batterieelektrode auf der zweiten Superkondensatorelektrode ausgebildet.

Vorteilhafterweise ist erfindungsgemäß vorgesehen, dass die zweite Superkondensatorelektrode einen elektrisch leitenden Kontakt für die erste Batterieelektrode bildet. Dadurch sind die erste Batterieelektrode und die zweite Superkondensatorelektrode elektrisch leitend miteinander verbunden. Die miteinander verbundene erste Batterieelektrode und zweite Superkondensatorelektrode können mindestens eine gemeinsame, außerhalb des gemeinsamen Gehäuses angeordnete Kontaktierungsstelle aufweisen. Mehrere Kontaktierungsstellen können insbesondere bei hohen Stromstärken vorteilhaft sein.

Bei einer besonders vorteilhaften Ausgestaltung der erfindungsgemäßen Energieversorgungsvorrichtung ist vorgesehen, dass es sich bei der Mikrobatterie um einen Lithium-Ionen-Akkumulator, um einen Natrium-Ionen-Akkumulator oder um einen ein anderes Material aufweisenden Ionen-Akkumulator handelt. Lithium-Ionen-Akkumulatoren weisen eine vergleichsweise hohe Energiedichte auf. Natrium-Ionen-Akkumulatoren erreichen regelmäßig eine geringere Energiedichte, benötigen jedoch kein seltenes und kostenintensives Lithium und können in großer Menge kostengünstig hergestellt werden. Es ist ebenfalls möglich, dass an Stelle eines vorangehend genannten Akkumulators ein aus anderen Materialien hergestellter Akkumulator wie beispielsweise ein Lithium-Luft-Akkumulator, ein Lithium-Schwefel-Akkumulator oder ein Natrium-Schwefel- oder Natrium-Luft-Akkumulator oder aber ein Nickel-Metall-Hybrid-Akkumulator verwendet wird.

Vorteilhafterweise ist erfindungsgemäß vorgesehen, dass es sich bei der Elektrodenbeschichtung um ein elektroaktives Metalloxid handelt.

Zur Herstellung einer Energieversorgungsvorrichtung mit einem Superkondensator und einer wieder aufladbaren Batterie, wobei die Oberfläche des Superkondensators die zweite Superkondensatorelektrode ist, werden vorteilhafterweise in einem ersten Schritt die elektrisch leitfähigen Nanodrähte oder Nanofasern der Kondensatorabschnitte bzw. der Elektrodengebilde auf einem ersten Substratabschnitt ausgebildet. Die elektrisch leitfähigen Nanodrähte werden auf dem ersten Substratabschnitt mechanisch verankert und elektrisch leitend auf dem Substratabschnitt miteinander verbunden.

Die elektrisch leitfähigen Nanodrähte oder Nanofasern können erfindungsgemäß beispielsweise aus Kupfer, Nickel, Gold, Platin oder Palladium hergestellt sein. Grundsätzlich ist die Herstellung der Nanodrähte oder Nanofasern aus jedem geeigneten und galvanisch abscheidbaren Material möglich, so dass auch Komposite, Legierungen und Mischungen verwendet werden können.

Die Anordnung der elektrisch leitfähigen Nanodrähte oder Nanofasern ist mikrostrukturiert, so dass auf dem ebenen ersten Substratabschnitt eine Vielzahl von Nanodrähten oder Nanofasern mit gleicher Ausrichtung bündelartig ausgebildet ist, die dann je Volumen eine vergleichsweise große Oberfläche aufweisen.

In einem weiteren Schritt wird vorteilhafterweise eine dielektrische Isolatorschicht auf die elektrisch leitenden Nanodrähte aufgebracht. Erfindungsgemäß kann das Dielektrikum bzw. die dielektrische Isolatorschicht nasschemisch oder durch chemische Gasphasenabscheidung auf die elektrisch leitenden Nanodrähte aufgebracht werden. Für die Aufbringung der dielektrischen Isolatorschicht können jegliche Arten der Gasphasenabscheidung und beispielsweise PVD, Sputtern, ALD oder andere Verfahren zum Einsatz kommen.

Vorteilhafterweise handelt es sich bei dem Dielektrikum um Zinkoxid, Zirconiumdioxid oder Hafniumdioxid, jedoch sind auch andere dielektrische Materialien wie beispielsweise Titanoxid oder Manganoxid sowie gegebenenfalls ternäre und quaternäre Phasen möglich und ebenfalls geeignet.

Anschließend wird in einem nachfolgenden Schritt erfindungsgemäß eine Metallschicht auf das Dielektrikum aufgebracht, wobei diese Metallschicht die zweite Superkondensatorelektrode bildet. Auf diese Weise wird der Superkondensator hergestellt.

Zur Herstellung der wieder aufladbaren Batterie wird erfindungsgemäß in einem weiteren Schritt auf die Metallschicht eine elektroaktive Elektrodenbeschichtung aufgebracht. Die Elektrodenbeschichtung kann beispielsweise durch elektroaktive Metalloxide oder andere elektroaktive Schichtmaterialien gebildet werden. Auf diese Weise wird auf einer Oberfläche der Kondensatorabschnitte die erste Batterieelektrode hergestellt. Bei der elektroaktiven Elektrodenbeschichtung handelt es sich vorteilhafterweise um Lithium-Eisenphosphat, Lithium-Kobaltphosphat, Lithium-Kobaltdioxid, Lithium-Eisendioxid oder Kombinationen dieser Metallphosphate oder Metalloxide. Bei der elektroaktiven Elektrodenbeschichtung kann es sich ebenfalls um Natrium-Eisenphosphat, Natrium-Kobaltphosphat, Natrium-Kobaltdioxid, Natrium-Eisendioxid oder Kombinationen dieser Metallphosphate oder Metalloxide. Die Verwendung anderer elektroaktiven Materialien mit vergleichbaren Eigenschaften ist ebenfalls möglich. Bei der auf diese Weise mit Lithium oder Natrium hergestellten ersten Batterieelektrode handelt es sich um eine Kathode einer wieder aufladbaren Lithium-Ionen-Batterie oder Natrium-Ionen-Batterie, wobei auch andere Materialien und Batterietypen möglich und gegebenenfalls gleichermaßen oder bevorzugt geeignet sind.

Die zweite Batterieelektrode wird vorteilhafterweise in einem weiteren Verfahrensschritt auf einem zweiten Substratabschnitt aus Kohlenstoffnanoröhren ausgebildet. Die auf diese Weise hergestellte zweite Batterieelektrode ist vorteilhafterweise ebenfalls mikrostrukturiert oder nanostrukturiert und weist eine vergleichsweise große Oberfläche auf.

Der erste Substratabschnitt und der zweite Substratabschnitt können erfindungsgemäß aneinander angrenzend auf einer Substratoberfläche oder auf einander gegenüberliegenden Substratoberflächen angeordnet werden. Weitere vorteilhafte Ausgestaltungen der erfindungsgemäßen Energieversorgungsvorrichtung werden anhand von in der Zeichnung dargestellten Ausführungsbeispielen näher erläutert. Es zeigt:
Fig. 1a eine schematische Darstellung eines auf einem ersten Substratabschnitt ausgebildeten Superkondensators mit mehreren Kondensatorabschnitten und einer auf einer Oberfläche des Superkondensators angeordneten Elektrodenbeschichtung,
Fig. 1b eine vergrößert dargestellte Ansicht einer der in Fig. 1a schematisch dargestellten Kondensatorabschnitte,
Fig. 2 eine schematische Darstellung einer Energieversorgungsvorrichtung mit auf einander gegenüberliegenden Substratabschnitten angeordneten Elementen eines Superkondensators und einer wieder aufladbaren Batterie,
Fig. 3 eine schematische Darstellung einer Energieversorgungsvorrichtung mit auf nebeneinander angeordneten Substratabschnitten angeordneten Elementen eines Superkondensators und einer wieder aufladbaren Batterie,
Fig. 4 eine exemplarische Darstellung eines Prototypen einer erfindungsgemäßen Energieversorgungsvorrichtung,
Fig. 5 eine schematische Darstellung eines Schaltbilds einer Energieversorgungsvorrichtung, bei der ein Superkondensator und die Batterie parallel geschaltet sind,
Fig. 6 eine schematische Darstellung einer Minimalkonfiguration für eine erfindungsgemäße Energieversorgungsvorrichtung,
Fig. 7 eine schematische Darstellung einer plattenförmig ausgestalteten Energieversorgungsvorrichtung,
Fig. 8 eine schematische Darstellung einer zylinderförmig ausgestalteten Energieversorgungsvorrichtung und
Fig. 9 eine schematische Darstellung einer abweichend ausgestalteten zylinderförmigen Energieversorgungsvorrichtung.

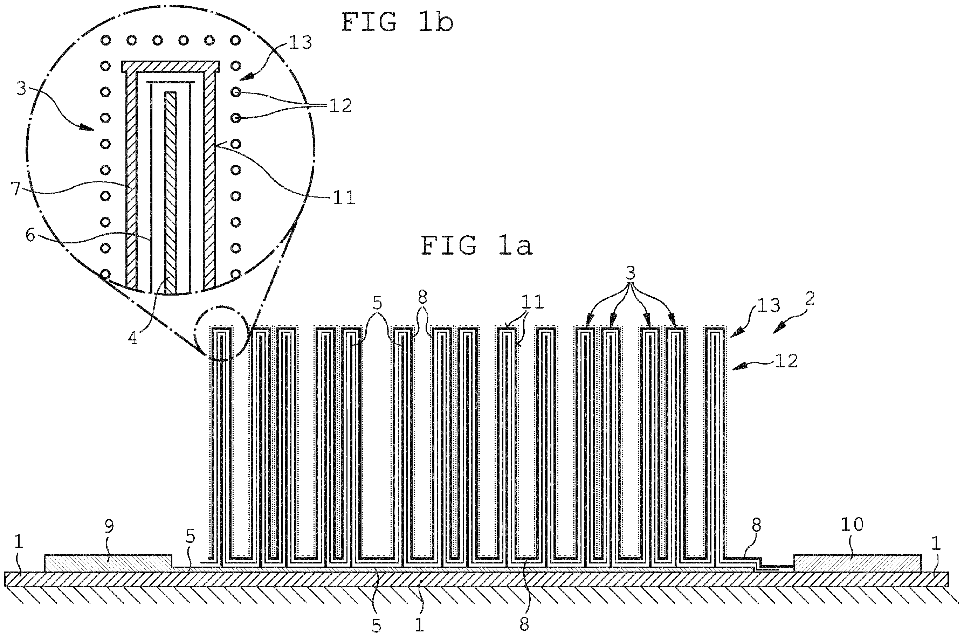

Fig. 1a zeigt eine schematisch dargestellte Schnittansicht eines auf einem ersten elektrisch leitfähigen Substratabschnitt 1 angeordneten Superkondensators 2. Der Superkondensator 2 weist mehrere auf dem ersten Substratabschnitt 1 verankerte und miteinander verbundene Kondensatorabschnitte 3 auf. In der Darstellung sind jeweils ausgewählte Kondensatorabschnitte 3 und Elemente der Kondensatorabschnitte 3 exemplarisch mit einem Bezugszeichen gekennzeichnet. Fig. 1b zeigt eine vergrößerte Darstellung eines Endbereichs eines Kondensatorabschnitts 3.

Die Kondensatorabschnitte 3 weisen jeweils einen auf dem ersten Substratabschnitt 1 verankerten elektrisch leitfähigen Nanodraht 4 auf, wobei die elektrisch leitfähigen Nanodrähte 4 elektrisch leitend miteinander verbunden sind. Die elektrisch leitend miteinander verbundenen elektrisch leitfähigen Nanodrähte 4 bilden zusammen mit dem ersten Substratabschnitt 1 die erste Superkondensatorelektrode 5. Auf die erste Superkondensatorelektrode 5 ist ein Dielektrikum 6 aufgebracht, das die erste Superkondensatorelektrode 5 elektrisch von einer aus einer elektrisch leitfähigen Beschichtung 7 gebildeten zweiten Superkondensatorelektrode 8 isoliert, die auf das Dielektrikum 6 aufgebracht ist. Das Dielektrikum 6 kann je nach Anforderungen des Einzelfalls fest, gel-artig oder flüssig sein. Die Beschichtung mit dem Dielektrikum 6 kann ebenso wie die Beschichtung mit der elektrisch leitfähigen Beschichtung 7 aus mehreren Lagen oder übereinander angeordneten Einzelschichten bestehen.

Angrenzend an den Superkondensator 2 ist eine erste Kontaktierungsstelle 9 auf dem ersten Substratabschnitt 1 angeordnet, wobei die erste Kontaktierungsstelle 9 elektrisch leitend mit der ersten Superkondensatorelektrode 5 verbunden ist. Eine ebenfalls auf dem ersten Substratabschnitt 1 angeordnete zweite Kontaktierungsstelle 10 ist elektrisch leitend mit der zweiten Superkondensatorelektrode 8 verbunden. Die erste Kontaktierungsstelle 9 und die zweite Kontaktierungsstelle 10 dienen der elektrischen Anbindung einer Energieversorgungsvorrichtung an ein von der Energieversorgungseinrichtung mit Energie versorgtes System.

Eine Oberfläche 11 des Superkondensators 2 entspricht einer Elektrodenoberfläche der zweiten Superkondensatorelektrode 8. Auf die Oberfläche 11 ist eine gegebenenfalls aus mehreren Einzelschichten aufgebaute Elektrodenbeschichtung 12 aufgebracht, wobei die Elektrodenbeschichtung 12 eine erste Batterieelektrode 13 bildet. Die Elektrodenbeschichtung 12 ist elektrisch leitend mit der zweiten Superkondensatorelektrode 8 verbunden, so dass die zweite Kontaktierungsstelle 10 auch zur Kontaktierung der ersten Batterieelektrode 13 dient.

Bei der Elektrodenbeschichtung 12 handelt es sich um eine Beschichtung aus einem elektroaktiven Metalloxid. Die erste Batterieelektrode 13 bildet eine Kathode einer wieder aufladbaren Lithium-Ionen-Batterie.

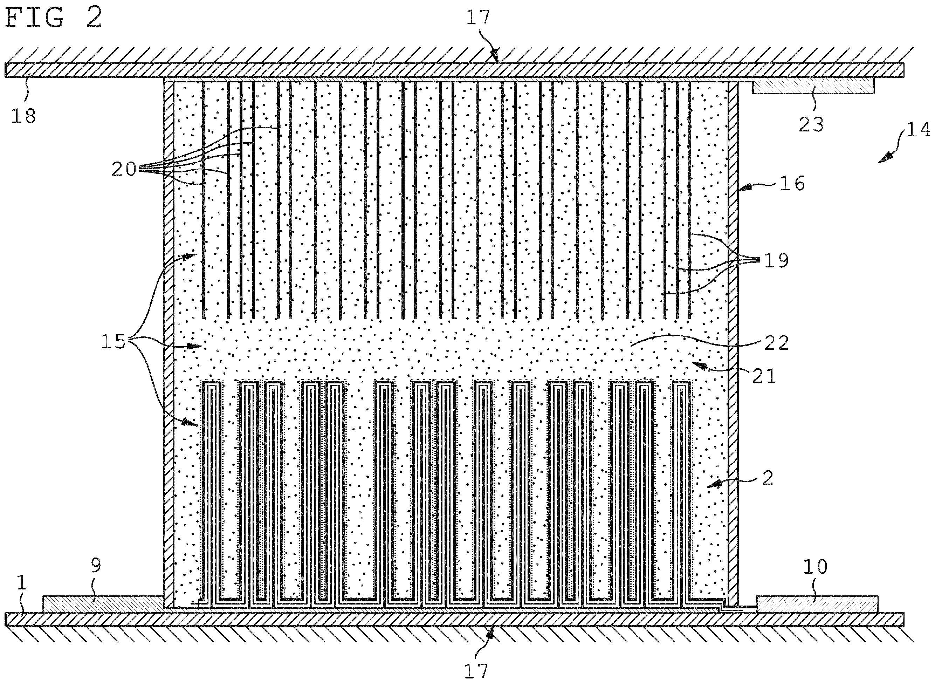

Fig. 2 zeigt eine schematisch dargestellte Schnittansicht einer Energieversorgungsvorrichtung 14 mit einem Superkondensator 2 und einer wieder aufladbaren Batterie 15. Der Superkondensator 2 und die wieder aufladbare Batterie 15 sind in einem gemeinsamen Gehäuse 16 angeordnet, wobei zwei gegenüberliegende Seiten 17 des Gehäuses 16 durch einen ersten Substratabschnitt 1 und einen zweiten Substratabschnitt 18 gebildet werden. Auf dem ersten Substratabschnitt 1 ist der Superkondensator 2 mit stabförmig ausgestalteten Kondensatorabschnitten 3 angeordnet, auf dessen Oberfläche 11 eine Elektrodenbeschichtung 12 angeordnet ist. Die Elektrodenbeschichtung 12 bildet eine erste Batterieelektrode 13 der Batterie 15.

Eine zweite Batterieelektrode 19 der wieder aufladbaren Batterie 15 ist auf dem zweiten Substratabschnitt 18 angeordnet. Die zweite Batterieelektrode 19 besteht aus mehreren, gleichförmig und gleichgerichtet auf dem zweiten Substratabschnitt 18 festgelegten Kohlenstoffnanoröhren 20. In der Figur sind exemplarisch einzelne Kohlenstoffnanoröhren mit einem Bezugszeichen 20 gekennzeichnet.

Ein Abstand der ersten Batterieelektrode 13 und der zweiten Batterieelektrode 19 ist vorteilhafterweise möglichst gering, um einen für die Energieversorgungsvorrichtung 14 erforderlichen Bauraum zu verringern.

In einem Innenraum 21 des Gehäuses 16 ist ein Elektrolyt 22 der wieder aufladbaren Batterie 15 angeordnet. Die Energieversorgungsvorrichtung 14 weist zudem eine erste Kontaktierungsstelle 9, eine zweite Kontaktierungsstelle 10 und eine dritte Kontaktierungsstelle 23 auf, die außerhalb des Gehäuses 16 auf dem ersten Substratabschnitt 1 und auf dem zweiten Substratabschnitt 18 angeordnet sind. Die erste Kontaktierungsstelle 9 ist mit der ersten Superkondensatorelektrode 5 elektrisch leitend verbunden, die zweite Kontaktierungsstelle 10 ist elektrisch leitend mit der zweiten Superkondensatorelektrode 8 und der ersten Batterieelektrode 13 verbunden und die dritte Kontaktierungsstelle 23 ist mit der zweiten Batterieelektrode 19 elektrisch leitend verbunden.

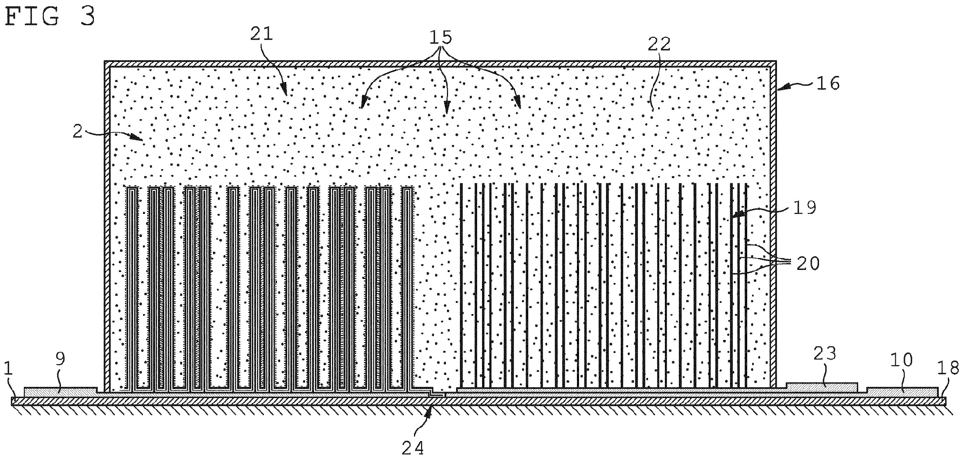

In Fig. 3 ist schematisch eine alternative Anordnung eines ersten Substratabschnitts 1 und eines zweiten Substratabschnitts 18 auf einer gemeinsamen Substratschicht 24 dargestellt. Der erste Substratabschnitt 1 weist einen Superkondensator 2 und eine Elektrodenbeschichtung 12 auf und ist auf dem ersten Substratabschnitt 1 angeordnet. Eine zweite Batterieelektrode 19 ist auf dem benachbart zu dem ersten Substratabschnitt 1 angeordneten zweiten Substratabschnitt 18 angeordnet. Der Superkondensator 2 und eine wieder aufladbare Batterie 15 sind in einem gemeinsamen Gehäuse 16 angeordnet, wobei ein Elektrolyt 22 der wieder aufladbaren Batterie 15 in einem Innenraum 21 des Gehäuses 16 angeordnet ist.

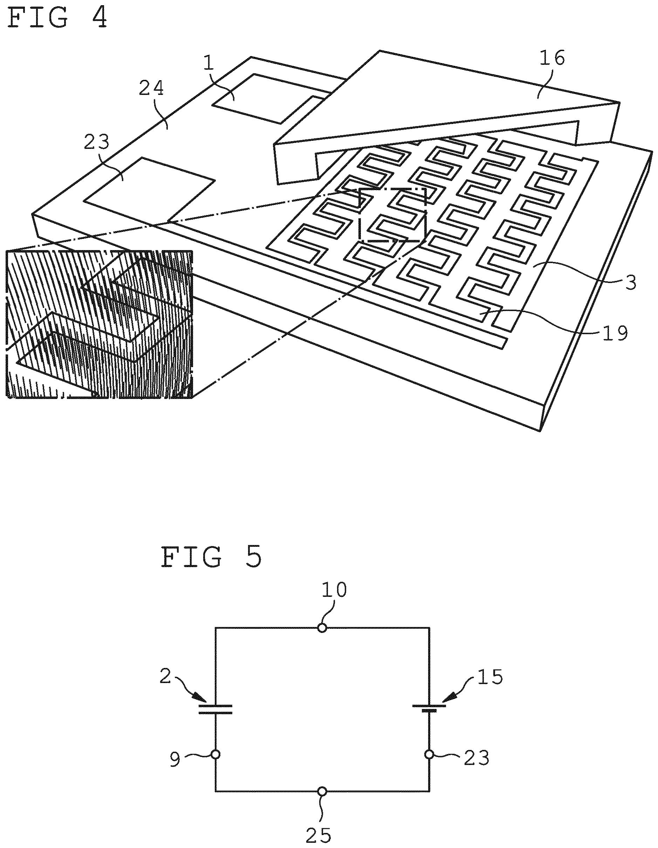

Bei dem in Fig. 4 exemplarisch gezeigten Ausführungsbeispiel eines Prototyps einer Energieversorgungsvorrichtung 14 sind der Superkondensator 2 und die Batterie 15 auf der gemeinsamen Substratschicht 24 angeordnet und von dem gemeinsamen Gehäuse 16 umgeben bzw. eingekapselt und geschützt. Die erste Superkondensatorelektrode 5 weist eine große Anzahl von nicht dargestellten elektrisch leitfähigen Nanodrähten 4 auf, die von dem Dielektrikum 6 umgeben und von der elektrisch leitfähigen Beschichtung 7 umhüllt sind, so dass die elektrisch leitfähige Beschichtung 7 die zweite Superkondensatorelektrode 8 bildet. Die zweite Superkondensatorelektrode 8, also die elektrisch leitfähige Beschichtung 7 der Nanodrähte 4, ist mit einer Elektrodenbeschichtung 12 aus einem elektroaktiven Metalloxid überzogen und bildet gleichzeitig die erste Batterieelektrode 13 der Batterie 15. Die zweite Batterieelektrode 19 wird von einer großen Anzahl Kohlenstoffnanoröhren 20 (CNTs) gebildet, die in gleicher Ausrichtung, jedoch räumlich benachbart zu den Nanodrähten 4 auf der gemeinsamen Substratschicht 24 angeordnet sind. In dem Gehäuse 16 befindet sich der nicht gesondert dargestellte Elektrolyt 22.

Die Seitenlängen der dargestellten gemeinsamen Substratschicht 24 betragen etwa 10 mm. Die charakteristischen Abmessungen der einzelnen Nanodrähte 4 und Kohlenstoffnanoröhren 20 sind im Bereich von Mikrometern und Nanometern. Eine große und leistungsstarke Energieversorgung kann aus einer gegebenenfalls großen Anzahl von exemplarisch in Fig. 4 abgebildeten Energieversorgungsvorrichtungen 14 zusammengesetzt sein.

In Fig. 5 ist schematisch eine Parallelschaltung des Superkondensators 2 und der Batterie 15 dargestellt, wobei gegebenenfalls zweckmäßige Ladeelektronik-Komponenten oder weitere elektronische Bauteile zur Verdeutlichung des Prinzips nicht abgebildet sind. Je nach Anwendungsfall können die relevanten Eigenschaften des Superkondensators 2 und der Batterie 15 in geeigneter Weise aufeinander abgestimmt sein. Die beiden Kontaktierungsstellen 9 und 23 des Superkondensators 2 und der Batterie 15 sind elektrisch leitend mit einer gemeinsamen Kontaktierungsstelle 25 verbunden.

Um beispielsweise eine nur langsam aufladbare Batterie 15 mit einem schnellen Aufladevorgang aufladen zu können sollte der Superkondensator 2 so ausgelegt sein, dass er mehr als die für eine vollständige Aufladung der Batterie 15 benötigte Energiemenge speichern kann. Durch eine kurzzeitige Verbindung der beiden Kontaktierungsstellen 10 und 25 mit einer nicht dargestellten elektrischen Energiequelle kann der Superkondensator 2 innerhalb kürzester Zeit bis an die maximale Kapazität aufgeladen werden. Nach einem Trennen der Energiequelle von den beiden Kontaktierungsstellen 10 und 25 wirkt der aufgeladene Superkondensator 2 als Aufladeeinrichtung für die Batterie 15, die von dem Superkondensator 2 langsam aufgeladen wird. Mit Hilfe des Superkondensators 2 können auf diese Weise langsam aufladbare Batterien 15 durch kurzzeitige Verbindung mit einer leistungsstarken Energiequelle und anschließendes Nachladen durch den Superkondensator 2 aufgeladen werden, wodurch deren Benutzungskomfort erheblich gesteigert werden kann. Die Batterie 15 weist im Vergleich zu dem Superkondensator 2 eine wesentlich geringere Selbstentladung auf, so dass der Superkondensator 2 im Wesentlichen zur raschen Energieaufnahme, jedoch nicht für eine lang andauernde Energiespeicherung verwendet wird. Ein derartiges Ladekonzept kann beispielsweise vorteilhaft zur Aufladung von Fahrzeugbatterien elektrischer Kraftfahrzeuge eingesetzt werden.

Soll dagegen kurzzeitig eine hohe Stromstärke durch die Energieversorgungsvorrichtung 14 zur Verfügung gestellt werden können, kann die Batterie 15 deutlich größer als der Superkondensator 2 dimensioniert werden. Wird die voll aufgeladene Energieversorgungsvorrichtung 14 mit den Kontaktierungsstellen 10 und 25 mit einem nicht dargestellten elektrischen Verbraucher, beispielsweise mit dem Anlasser eines Kraftfahrzeugs verbunden, so kann in kürzester Zeit der Superkondensator 2 vollständig entleert werden und dabei eine große Energiemenge mit hoher Stromstärke abgeben. Nach der Entleerung des Superkondensators 2 und der Trennung von dem elektrischen Verbraucher kann der Superkondensator 2 durch die Batterie 15 wieder aufgeladen und für einen nachfolgenden Entleerungsvorgang vorbereitet werden.

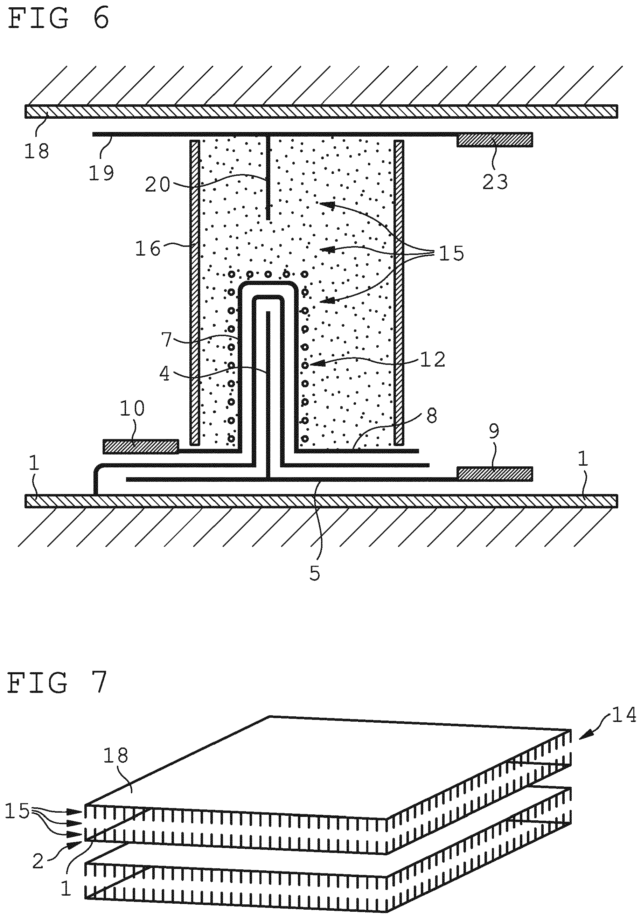

In Fig. 6 ist schematisch eine Minimalkonfiguration einer erfindungsgemäßen Energieversorgungsvorrichtung 14 gezeigt. Der Superkondensator 2 weist eine erste Superkondensatorelektrode 5 mit einem einzelnen Nanodraht 4 auf, der mit einem Dielektrikum 5 beschichtet und mit einer elektrisch leitfähigen Beschichtung 7 umhüllt, welche die zweite Superkondensatorelektrode 8 und gleichzeitig die erste Batterieelektrode 13 bildet. Die Oberfläche 11 der elektrisch leitfähigen Beschichtung 7 ist mit einer Elektrodenbeschichtung 12 überzogen. Die zweite Batterieelektrode 19 weist ein einzelnes Kohlenstoffnanoröhrchen 20 auf, das an einer dem Superkondensator 2 gegenüberliegenden Substratschicht 18 angeordnet ist. Diese Anordnung wird von dem Gehäuse 16 umhüllt. In dem Innenraum 21 befindet sich der Elektrolyt 22. Die Kontaktierungsstellen 9, 10 und 23 sind aus dem Gehäuse 16 herausgeführt.

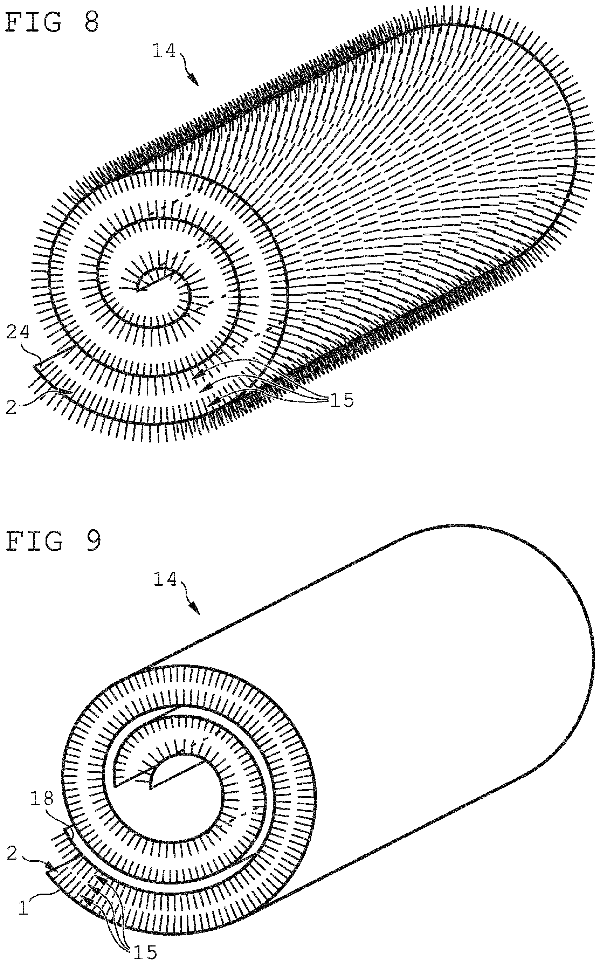

In den Figuren 7 bis 9 sind verschiedene Formgebungen von Energieversorgungsvorrichtungen 14 mit großen Abmessungen dargestellt, wobei ein umhüllendes Gehäuse 16 nicht abgebildet ist. Die in Fig. 7 schematisch dargestellte plattenförmige Konfiguration der Energieversorgungsvorrichtung 14 ist beispielsweise zur Verwendung in einem Smartphone geeignet. Eine zylinderförmige Konfiguration, wie sie schematisch in den Fig. 8 und 9 dargestellt ist, ist beispielsweise als Energieversorgung für Kraftfahrzeuge geeignet. Während bei dem in Fig. 8 gezeigten Ausführungsbeispiel der Superkondensator 2 und die zweite Batterieelektrode 19 auf einer gemeinsamen Substratschicht 24 angeordnet sind, sind der Superkondensator 2 und die zweite Batterieelektrode 19 bei dem in Fig. 9 gezeigten Ausführungsbeispiel auf getrennten Substratschichten 1 und 18 angeordnet. Die charakteristischen Abmessungen der in den Fig. 7 bis 9 gezeigten Ausgestaltungen der Energieversorgungsvorrichtung 14 kann mehrere Zentimeter und sogar Meter betragen.

## Patentansprüche

1. Energieversorgungsvorrichtung (14) mit einem Superkondensator (2) und mit einer wieder aufladbaren Batterie (15), wobei auf eine Oberfläche (11) des Superkondensators (2) eine Elektrodenbeschichtung (12) aufgebracht ist, die eine erste Batterieelektrode (13) bildet, und wobei der Superkondensator (2) mehrere stabförmig ausgebildete Kondensatorabschnitte (3) aufweist, **dadurch gekennzeichnet, dass** die Kondensatorabschnitte (3) jeweils einen elektrisch leitenden Nanodraht (4) oder eine Nanofaser aufweisen, wobei die Nanodrähte (4) oder die Nanofasern der Kondensatorabschnitte (3) elektrisch leitend miteinander verbunden sind und eine erste Superkondensatorelektrode (5) bilden, wobei die erste Superkondensatorelektrode (5) von einem Dielektrikum (6) umgeben ist und wobei auf das Dielektrikum (6) eine elektrisch leitfähige Beschichtung (7) aufgebracht ist, die eine zweite Superkondensatorelektrode (8) bildet, und dass die wieder aufladbare Batterie (15) Kohlenstoffnanoröhren (20) aufweist, die die zweite Batterieelektrode (19) bilden.

2. Energieversorgungsvorrichtung (14) gemäß Anspruch 1, **dadurch gekennzeichnet, dass** der Superkondensator (2) und die wieder aufladbare Batterie (15) in einem gemeinsamen Gehäuse (16) angeordnet sind.

3. Energieversorgungsvorrichtung (14) gemäß Anspruch 2, **dadurch gekennzeichnet, dass** ein Elektrolyt (22) und eine zweite Batterieelektrode (19) der wieder aufladbaren Batterie (15) innerhalb des Gehäuses (16) angeordnet sind.

4. Energieversorgungsvorrichtung (14) gemäß einem der voranstehenden Ansprüche, **dadurch gekennzeichnet, dass** die Oberfläche (11) des Superkondensators (2) eine Elektrodenoberfläche der zweiten Superkondensatorelektrode (8) ist.

5. Energieversorgungsvorrichtung (14) gemäß einem der voranstehenden Ansprüche, **dadurch gekennzeichnet, dass** die zweite Superkondensatorelektrode (8) einen elektrisch leitenden Kontakt für die erste Batterieelektrode (13) bildet.

6. Energieversorgungsvorrichtung (14) gemäß einem der voranstehenden Ansprüche, **dadurch gekennzeichnet, dass** es sich bei der Batterie (15) um einen Lithium-Ionen-Akkumulator oder um einen Natrium-Ionen-Akkumulator handelt.

7. Energieversorgungsvorrichtung (14) gemäß einem der voranstehenden Ansprüche, **dadurch gekennzeichnet, dass** es sich bei der Elektrodenbeschichtung (12) um ein elektroaktives Metalloxid handelt.

## Claims

1. Energy supply device (14) having a supercapacitor (2) and a rechargeable battery (15), wherein an electrode coating (12) is applied on to a surface (11) of the supercapacitor (2), which forms a first battery electrode (13), and wherein the supercapacitor (2) comprises multiple rod-shaped capacitor portions (3), **characterized in that** the capacitor portions (3) each comprise an electrically-conductive nanowire (4) or a nanofiber, wherein the nanowires (4) or the nanofibers of the capacitor portions (3) are connected to one another in an electrically-conductive manner and form a first supercapacitor electrode (5), wherein the first supercapacitor electrode (5) is surrounded by a dielectric (6) and wherein an electrically-conductive coating (7) is applied on to the dielectric (6), which forms a second supercapacitor electrode (8), an **in that** the rechargeable battery (15) comprises carbon nanotubes (20) forming the second battery (19).

2. Energy supply device (14) according to claim 1, **characterized in that** the supercapacitor (2) and the rechargeable battery (15) are arranged in a common housing (16) .

3. Energy supply device (14) according to claim 2, **characterized in that** an electrolyte (22) and a second battery electrode (19) of the rechargeable battery (15) are arranged inside the housing (16).

4. Energy supply device (14) according to one of the preceding claims, **characterized in that** the surface (11) of the supercapacitor (2) is an electrode surface of the second supercapacitor electrode (8).

5. Energy supply device (14) according to one of the preceding claims, **characterized in that** the second supercapacitor electrode (8) forms an electrically-conductive contact for the first battery electrode (13).

6. Energy supply device (14) according to one of the preceding claims, **characterized in that** the battery (15) is a lithium ion accumulator or a natrium ion accumulator.

7. Energy supply device (14) according to one of the preceding claims, **characterized in that** the electrode coating (12) is an electroactive metal oxide.

## Revendications

1. Dispositif d'alimentation en énergie (14) comprenant un super condensateur (2) et comprenant une batterie (15) rechargeable, un revêtement d'électrode (12) étant appliqué sur une surface (11) du super condensateur (2), lequel revêtement forme une première électrode de batterie (13), et le super condensateur (2) présentant plusieurs sections de condensateur réalisées en forme de barre,
**caractérisé en ce que** les sections de condensateur (3) présentent respectivement un nanofil (4) électro-conducteur ou une nanofibre, les nanofils (4) ou les nanofibres des sections de condensateur (3) étant reliés/reliées entre eux/elles de manière électro-conductrice et formant une première électrode (5) de super condensateur, la première électrode (5) de super condensateur étant entourée par un diélectrique (6), et un revêtement (7) électro-conducteur étant appliqué sur le diélectrique (6), lequel forme une deuxième électrode (8) de super condensateur, et **en ce que** la batterie (15) rechargeable présente des nanotubes de carbone qui forment la deuxième électrode de batterie (19).

2. Dispositif d'alimentation en énergie (14) selon la revendication 1, **caractérisé en ce que** le super condensateur (2) et la batterie (15) rechargeable sont disposés dans un boîtier commun (16).

3. Dispositif d'alimentation en énergie (14) selon la revendication 2, **caractérisé en ce qu'**un électrolyte et une deuxième électrode de batterie (19) de la batterie (15) rechargeable sont disposés dans le boîtier (16).

4. Dispositif d'alimentation en énergie (14) selon l'une quelconque des revendications précédentes, **caractérisé en ce que** la surface (11) du super condensateur (2) est une surface d'électrode de la deuxième électrode (8) de super condensateur.

5. Dispositif d'alimentation en énergie (14) selon l'une quelconque des revendications précédentes, **caractérisé en ce que** la deuxième électrode (8) de super condensateur forme un contact électro-conducteur pour la première électrode de batterie (13).

6. Dispositif d'alimentation en énergie (14) selon l'une quelconque des revendications précédentes, **caractérisé en ce que** la batterie (15) est un accumulateur lithium-ion ou un accumulateur natrium-ion.

7. Dispositif d'alimentation en énergie (14) selon l'une quelconque des revendications précédentes, **caractérisé en ce que** le revêtement d'électrode (12) est un oxyde métallique électro-actif.
